# EUROPEAN PATENT APPLICATION

(11) **EP 2 210 764 A2**
(43) Date of publication of application: **28.07.2010**
(21) Application number: 10002621.0
(22) Date of filing: 05.09.2008
(51) Int. Cl.: B60L 11/18, H02J 7/00, H01R 13/717

(54) **Battery module for electric vehicles**

(30) Priority: 07.09.2007 US 970853 P
(62) Divisional of application: 08831042.0
(71) Applicant: Johnson Controls Saft Advanced Power Solutions LLC, Wilmington, DE 19801 (US)
(72) Inventor: TAGHIKHANI, Majid, Franklin, Wisconsin 53132 (US); MOLINE, Luke, L., West Olive Michigan 49460 (US); MAKI, Jacob, G., Newberry Michigan 49868 (US); MCCARTY, David, J., Holland Michigan 49429 (US)
(74) Representative: Günther, Constantin

(57) **Abstract**

A battery module (30) for use in an electric vehicle includes a housing (41) and a member (32) provided within the housing (41) that contains a plurality of electrochemical cells (40). The member (32) includes apertures (36) in an outer surface of the member (32) that allow a thermal management fluid to exit the member (32) after passing adjacent outer surfaces of the plurality of the electrochemical cells (40) within the member (32). The apertures (36) include apertures of a first size (36c) near a first end of the member (32) and apertures of a second size (36a) larger than the first size near a second opposite end of the member (32) to provide relatively even thermal regulation among the plurality of electrochemical cells (40).

## Description

### CROSS-REFERENCE TO RELATED PATENT APPLICATIONS

The present application claims priority to and the benefit of U.S. Provisional Patent Application No. 60/970,853, filed September 7, 2007. The entire disclosures of U.S.. Provisional Patent Application No. 60/970,853, filed September 7, 2007, and U.S. Provisional Patent Application No. 60/878,766, filed January 5, 2007, are incorporated herein by reference.

### BACKGROUND

The present application relates generally to the field of batteries and battery systems. More specifically, the present application relates to batteries and battery systems that may be used in vehicle applications to provide at least a portion of the motive power for the vehicle.

Vehicles using electric power for all or a portion of their motive power (e.g., electric vehicles (EVs), hybrid electric vehicles (HEVs), plug-in hybrid electric vehicles (PHEVs), and the like, collectively referred to as "electric vehicles") may provide a number of advantages as compared to more traditional gas-powered vehicles using internal combustion engines. For example, electric vehicles may produce fewer undesirable emission products and may exhibit greater fuel efficiency as compared to vehicles using internal combustion engines (and, in some cases, such vehicles may eliminate the use of gasoline entirely, as is the case of certain types of PHEVs).

As electric vehicle technology continues to evolve, there is a need to provide improved power sources (e.g., battery systems or modules) for such vehicles. For example, it is desirable to increase the distance that such vehicles may travel without the need to recharge the batteries. It is also desirable to improve the performance of such batteries and to reduce the cost associated with the battery systems.

One area of improvement that continues to develop is in the area of battery chemistry. Early electric vehicle systems employed nickel-metal-hydride (NiMH) batteries as a propulsion source. Over time, different additives and modifications have improved the performance, reliability, and utility of NiMH batteries.

More recently, manufacturers have begun to develop lithium-ion batteries that may be used in electric vehicles. There are several advantages associated with using lithium-ion batteries for vehicle applications. For example, lithium-ion batteries have a higher charge density and specific power than NiMH batteries. Stated another way, lithium-ion batteries may be smaller than NiMH batteries while storing the same amount of charge, which may allow for weight and space savings in the electric vehicle (or, alternatively, this feature may allow manufacturers to provide a greater amount of power for the vehicle without increasing the weight of the vehicle or the space taken up by the battery system).

It is generally known that lithium-ion batteries perform differently than NiMH batteries and may present design and engineering challenges that differ from those presented with NiMH battery technology. For example, lithium-ion batteries may be more susceptible to variations in battery temperature than comparable NiMH batteries, and thus systems may be used to regulate the temperatures of the lithium-ion batteries during vehicle operation. The manufacture of lithium-ion batteries also presents challenges unique to this battery chemistry, and new methods and systems are being developed to address such challenges.

### SUMMARY

An exemplary embodiment relates to a battery system for a vehicle that receives at least a portion of its motive power from a battery module comprising a plurality of rechargeable electrochemical cells. The system includes a vehicle module comprising a first member configured to engage a portion of an external charging device and a second member configured to provide a visual indication relating to a charge condition of the vehicle battery system. The second member is provided proximate the location where the external charging device is coupled to the first member and is visible when the external charging device is coupled to the first member.

An exemplary embodiment relates to a battery system for a plug-in vehicle including a battery module comprising a plurality of electrochemical cells. A battery charger is provided within the vehicle and electrically coupled to the battery module. A plug-in receptacle is electrically coupled to the battery charger, the receptacle having an at least one sense line and at least one power line. A plug-in connector is configured to plug in to the plug-in receptacle, the connector being electrically connected to a power source.

An exemplary embodiment relates to a battery module for use in an electric vehicle including a plurality of trays configured to hold a plurality of electrochemical cells provided in the trays. The plurality of trays comprise a plurality of apertures to direct a thermal management fluid through the battery module to thermally regulate the electrochemical cells. The plurality of apertures are provided in a first size near an inlet of the of the flow of the thermal management fluid and in a second size larger than the first size near an outlet of the flow of the thermal management fluid to provide relatively even thermal regulation among the plurality of electrochemical cells.

### BRIEF DESCRIPTION OF THE DRAWINGS

FIG. 1 is a perspective view of a vehicle including a battery system according to an exemplary embodiment.

FIG. 2 is a schematic cutaway view of a hybrid electric vehicle according to an exemplary embodiment.

FIG. 3 is a perspective view of the rear cargo area of a vehicle such as that shown in FIG. 2 showing a battery system or module according to an exemplary embodiment.

FIG. 4 is a perspective view of the battery module of FIG. 3 according to an exemplary embodiment.

FIG. 5 is an exploded view of the battery module of FIG. 4 according to an exemplary embodiment.

FIG. 6 is a cross-section view of the battery module of FIG. 4 taken along line 6-6 according to an exemplary embodiment.

FIGS. 7-8 are perspective views of a plug-in receptacle for the battery system of FIG. 1 according o an exemplary embodiment.

FIG. 9 is a top view of a plug-in connector for the battery system of FIG. 1 according to an exemplary embodiment.

FIG. 10 is a side view of a plug-in connector for the battery system of FIG. 1 according to an exemplary embodiment.

FIG. 11 is a perspective view of a plug-in connector for the battery system of FIG. 1 according to an exemplary embodiment.

FIGS. 12-13 are perspective views of a plug-in connector engaging the plug-in receptacle of the battery system of FIG. 1 according to an exemplary embodiment.

FIG. 14 is a schematic diagram of a portion of a battery system according to an exemplary embodiment.

### DETAILED DESCRIPTION

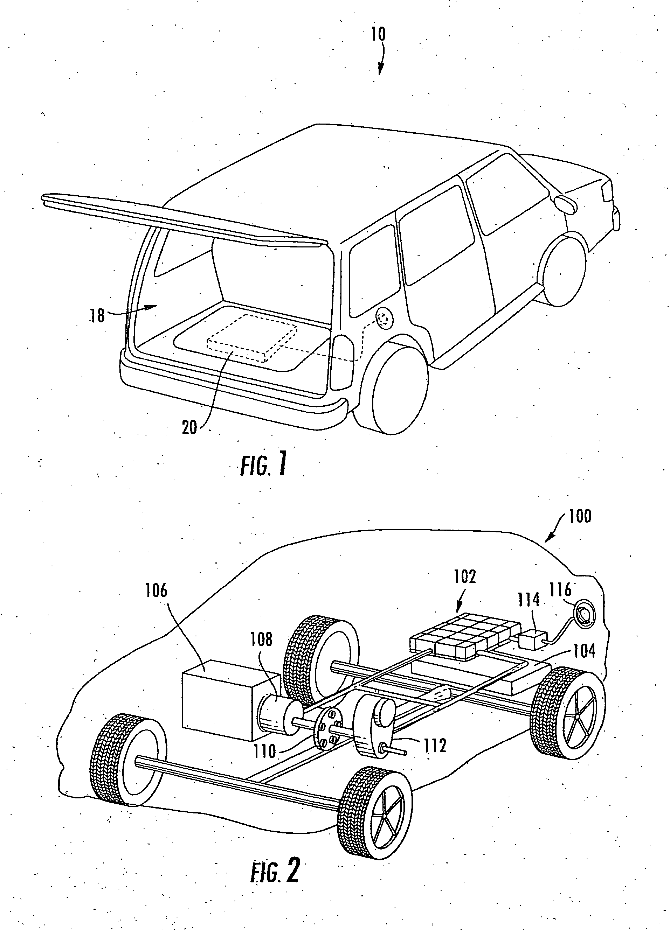

FIG. 1 is a perspective view of a vehicle 10 in the form of an automobile having a battery system 20 for providing all or a portion of the motive power for the vehicle. Such a vehicle 10 can be an electric vehicle (EV), a hybrid electric vehicle (HEV), a plug-in hybrid electric vehicle (PHEV), or other type of vehicle using electric power for propulsion (collectively referred to as "electric vehicles").

Although illustrated as a car in FIG. 1, the type of vehicle may differ according to other exemplary embodiments, all of which are intended to fall within the scope of the present disclosure. For example, the vehicle 10 may be a truck, bus, industrial vehicle, motorcycle, recreational vehicle, boat, or any other type of vehicle that may benefit from the use of electric power for all or a portion of its propulsion power.

FIG. 2 illustrates a cutaway schematic view of a vehicle 100 provided in the form of a PHEV according to an exemplary embodiment. A battery system 102 is provided toward the rear of the vehicle 100 proximate to a fuel tank 104 (battery system 102 may be provided immediately adjacent to the fuel tank 104 or may be provided in a separate compartment in the rear of the vehicle 100 (e.g., a trunk) or may be provided elsewhere in the vehicle 100). An internal combustion engine 106 is provided for times when the vehicle 100 utilizes gasoline power to propel itself. An electric motor 108, a power split device 110, and a generator 112 are also provided as part of the vehicle drive system of vehicle 100. The vehicle 100 may be powered or driven by just the battery system 102, by just the engine 106, or by both the battery system 102 and the engine 106. According to an exemplary embodiment, the vehicle 100 further includes a.battery charger 114 coupled to the battery system 102 and an input 116. Vehicle 10 may receive power from an external power source through input 116 to charge the battery system 102 using the battery charger 114.

It should be noted that other types of vehicles and configurations for the vehicle electrical system may be used according to other exemplary embodiments, and that the schematic illustration of FIG. 2 should not be considered to limit the scope of the subject matter described in the present application.

According to various exemplary embodiments, the size, shape, and location of the battery system or module, the type of vehicle, the type of vehicle technology (e.g., EV, HEV, PHEV, etc.), and the battery chemistry, among other features, may differ from those shown or described.

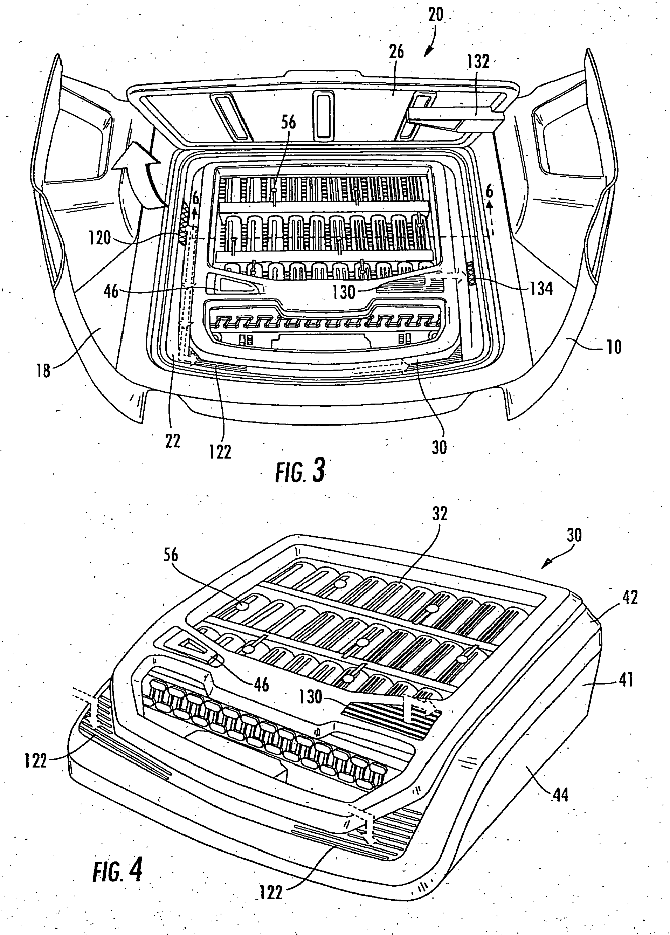

According to an exemplary embodiment, the battery system 20 connects a battery pack or battery module (shown, for example as pack or module 30 in FIGS. 3-4) to other components of the vehicle 10 (e.g., the vehicle electrical system). The battery system 20 also monitors and regulates the battery module 30. For example, the battery system 20 may include features that are responsible for monitoring and controlling the electrical performance of the module, managing the thermal behavior of the module, containing and/or routing of effluent (e.g., gases that may be vented from a battery cell), and other aspects of the battery module.

Although the battery system 20 is illustrated in FIGS. 1-3 as being positioned in the trunk or rear of the vehicle 10, according to other exemplary embodiments, the location of the battery system 20 may differ. For example, the position of the battery system 20 may be selected based on the available space within the vehicle 10, the desired weight balance of the vehicle 10, the location of other components used with the battery system 20 (e.g., battery management system 50, vents or cooling devices, etc.), and a variety of other considerations.

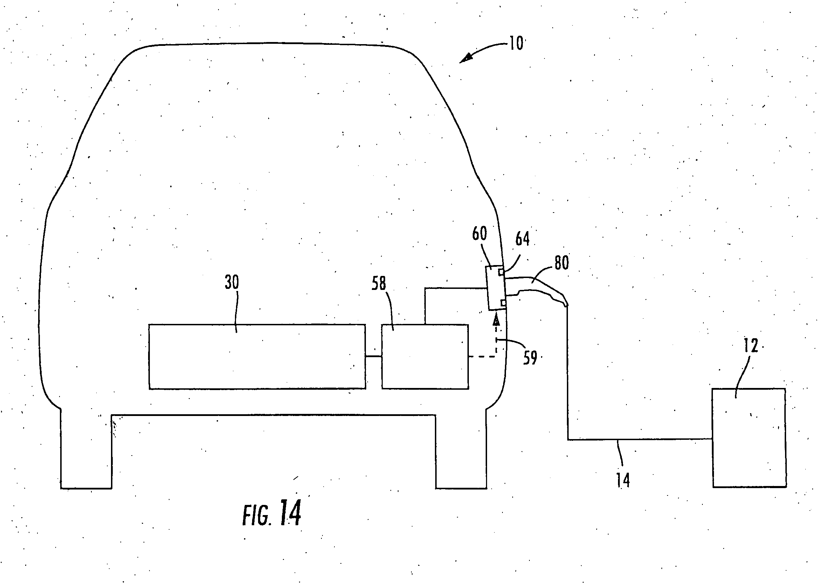

Referring to FIGS. 3 and 14, the vehicle 10 includes a battery chamber 22 (e.g., tray, container, housing, or pan) that receives or contains one or more of the components of the battery system 20. The battery system 20 includes a battery module or battery pack 30, a battery management system (BMS) 50, one or more sensors 56 (e.g., temperature sensors, voltage sensors, etc.), a battery charger 58, and a plug-in module or device 60. A plug-in connector 80 may be coupled to the plug-in module 60 to provide power to battery system 20 from a power source 12 (e.g., an external power source), according to an exemplary embodiment. According to an exemplary embodiment, the battery chamber 22 is provided below the rear cargo or passenger area of the vehicle 10. A cover 26 encloses the battery module 30 arid other components of battery system 20 in battery chamber 22, generally isolating the components from the cargo or passenger area of the vehicle 10. The cover 26 may include runners, ribs, protrusions, extensions, or other structural features to add additional strength to cover 26.

Referring to FIGS. 4-6, a battery module or battery pack 30 is shown according to an exemplary embodiment. The battery module 30 includes a plurality of electrochemical cells or batteries 40 (e.g., lithium-ion cells, nickel-metal-hydride cells, lithium polymer cells, etc., or other types of electrochemical cells now known or hereafter developed). According to an exemplary embodiment, the electrochemical cells 40 are generally cylindrical lithium-ion cells configured to store an electrical charge. According to other exemplary embodiments, the cells 40 could have other physical configurations (e.g., oval, prismatic, polygonal, etc.). The capacity, size, design, and other features of the cells 40 may also differ from those shown according to other exemplary embodiments.

Each of the cells 40 are electrically coupled to one or more other cells 40 or other components of the battery module 30 using connectors provided in the form of bus bars 38 or similar elements.

Battery module 30 further includes a plurality of members or elements in the form of trays 32 or similar structures to hold and contain the cells 40 in relation to each other. Trays 32 may be made of a polymeric material or other suitable materials (e.g., electrically insulative materials).

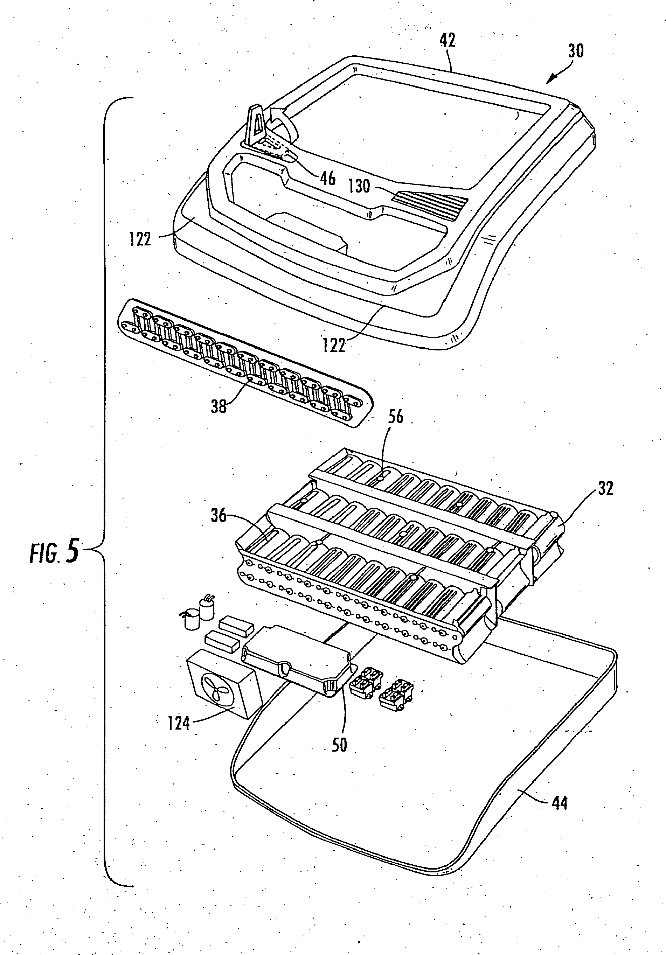

Although illustrated in FIG. 5 as having a particular number of electrochemical cells 40 (e.g., although a number of the electrochemical cells 40 are partially obscured, the battery system 20 includes three groups or banks of electrochemical cells 40 arranged in two layers, with each layer including eleven electrochemical cells 40, for a total of 66 electrochemical cells 40), it should be noted that according to other exemplary embodiments, a different number and/or arrangement of electrochemical cells 40 may be used depending on any of a variety of considerations (e.g., the desired power for the battery system 20, the available space within which the battery module 30 must fit, etc.).

A plurality of sensors 56 (e.g., temperature sensors) may be provided at a plurality of locations throughout the battery module 30 to sense the temperature of the cells 40. Sensors 56 may be configured to transmit temperature data to another component such as the BMS 50 so that the cells 40 may be monitored and regulated. For example; BMS 50 may monitor the individual cells 40 and take preventative measures if a cell 40 malfunctions or is about to malfunction. Careful monitoring and oversight of the cells 40 may prevent the cells 40 from venting and allows for the cells 40 to return to ordinary cell activity after the cells 40 have reached regular operating cell temperature and pressure.

The sensors 56 may be placed such that a temperature reading of each of the cells 40 in battery module 30 may be interpolated by the BMS 50 without having to provide a temperature sensor for each cell 40. According to an exemplary embodiment, seven temperature sensors 56 are provided on the top of trays 32, three temperature sensors are provided in the middle of trays 32 (e.g., between the layers of cells 40), and five temperature sensors are provided on the bottom of trays 32. According to other embodiments, the number and/or position of the sensors may vary.

A housing 41 as shown in FIG. 4 may be provided to partially or completely surround or enclose the cells 40 and the trays 32. According to an exemplary embodiment, the housing 41 is a clam-shell structure with an upper portion or cover 42 and a lower portion or base 44 as shown in Figure 5. Upper housing 42 may include one or more windows or transparent portions that allows the interior of the battery module 30 to be viewed. According to other exemplary embodiments, the lower housing 44 may be a simple base plate to which the upper housing 42 is coupled. According to other exemplary embodiments, the housing 41 may be any other structure that substantially surrounds or contains cells 40.

Battery chamber 22, cover 26, upper housing 42, and lower housing 44 may be made of any of a wide variety of materials as are well known in the art. For example, upper housing 42 may include transparent portions (as described above) that are formed from polycarbonate or another suitable transparent material. The battery chamber 22 and cover 26 may be formed from any material(s) of suitable structural integrity and rigidity such as metal, plastic, composite materials such as fiberglass-reinforced plastic, etc. According to another exemplary embodiment, cover 26 may include transparent portions that are formed from polycarbonate or another suitable transparent material.

The housing 41 may include a disconnect feature 46 as shown according to an exemplary embodiment in FIGS. 3-5. Disconnect feature 46 may be configured to act as a safety or lock-out device for the battery system 20. According to an exemplary embodiment, the disconnect feature 46 must be moved (e.g., rotated, disengaged, activated, etc.) from an operating positions (as shown in FIGS. 3-4) to a servicing position (as shown in FIG. 5) in order for the upper housing 42 to be removed from the lower housing 44. Activating the disconnect feature 46 turns off or disconnects the high voltage connection of the battery module 30 before allowing access to the interior components of the battery module 30 (e.g., for servicing, etc.). Returning the disconnect feature 46 back to the operating position reconnects the high voltage connection of the battery module 30 and returns the battery system 20 to normal operation.

A thermal management fluid (e.g., a liquid or a gas such as air) to warm or cool the cells 40 may be provide to the battery system 20. According to an exemplary embodiment, the thermal management fluid is air which is drawn into the battery chamber 22 (e.g., from the outside environment, from the vehicle cabin, or from a combination of the outside environment and the vehicle cabin) through an opening 120. A device such as a flapper valve (not shown) may be provided proximate to opening 120 to control the percentage of air drawn from the outside environment or the vehicle cabin.

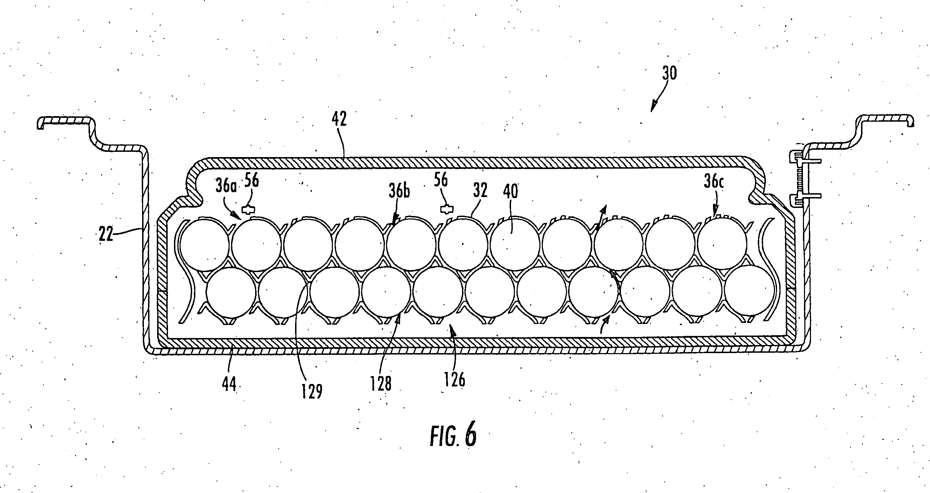

The air is drawn into the battery module 30 through an inlet 122 in the upper housing 42 by a fan 124. While the fan 124 is shown in FIG. 5 as being provided inside the battery module 30, according to other exemplary embodiments, the fan 124 may be provided outside the battery module 30 and may force air into the battery module 30 through ducts. Fan 124 forces the air to a plenum or chamber 126 (as shown in FIG. 6). The plenum 126 is provided below the trays 32 and is in fluid communication with a plurality of passages, channels, or spaces 128 provided through the trays 32. The passages 128 provide the air to the cells 40. The operation of the fan 124 (e.g., on/off status, speed, etc.) may be controlled by the BMS 50 in relation to the temperature data the BMS 50 receives regarding the cells 40 (e.g., via the sensors 56).

According to an exemplary embodiment, the trays 32 are formed to direct air through the battery module 30 and around the cells 40. Trays 32 may include features to provide spacing of the cells 40 away from the surface of trays 32 and/or from adjacent cells 40. For example, according to an exemplary embodiment, the trays 32 may include a series of ribs or protrusions 129 (as shown in FIG. 6) that provide the passages 128 for the air to flow around the outer surfaces of the cells 40. The trays 32 may also be formed or constructed as shown and described in International Patent Application No. PCT/US2008/056078, the entire disclosure of which is incorporated herein in its entirety.

Air exits the trays 32 through a plurality of apertures 36 (e.g., apertures 36a, 36b, and 36c) and is directed out of the battery module 30 through an outlet 130 (FIG. 4) in the upper housing 42. A duct 132 is provided to isolate the outgoing air from the incoming air. According to an exemplary embodiment, the duct 132 is provided to direct air from the outlet 130 through an opening 134 in the battery chamber 22 to the exterior environment. According to an exemplary embodiment, the duct 132 is formed with or otherwise coupled to the cover 26. A sealing member (e.g., o-ring, gasket, etc.) may be provided around the outlet 130 and or the opening 134 that cooperates with the duct 132 to substantially prevent outgoing air from mixing with the input air. According to other exemplary embodiments, the duct 132 may be a separate component that is coupled to the upper housing 42 or the cover 26.

As shown in FIGS. 6, a plurality of various sized apertures 36 may be provided by the trays 32 to provide relatively even thermal regulation (e.g., cooling or heating) of the plurality of electrochemical cells 40. For example, smaller-sized apertures 36 may be provided closer to the outlet 130 and larger-sized apertures 36 may be provided further from the outlet 130. According to an exemplary embodiment, large apertures 36a are provided on the trays 32 distant from the outlet 130, medium apertures 36b are provided on the trays 32 at a middle distance from the outlet 130, and small apertures 36c are provided on the trays 32 proximate to the outlet 130. The different sized apertures 36 of the trays 32 provide for even flow of the thermal management fluid through the passages 128 by restricting the flow of the fluid through the small apertures 36c and allowing the fluid to more easily flow through the large openings 36a.

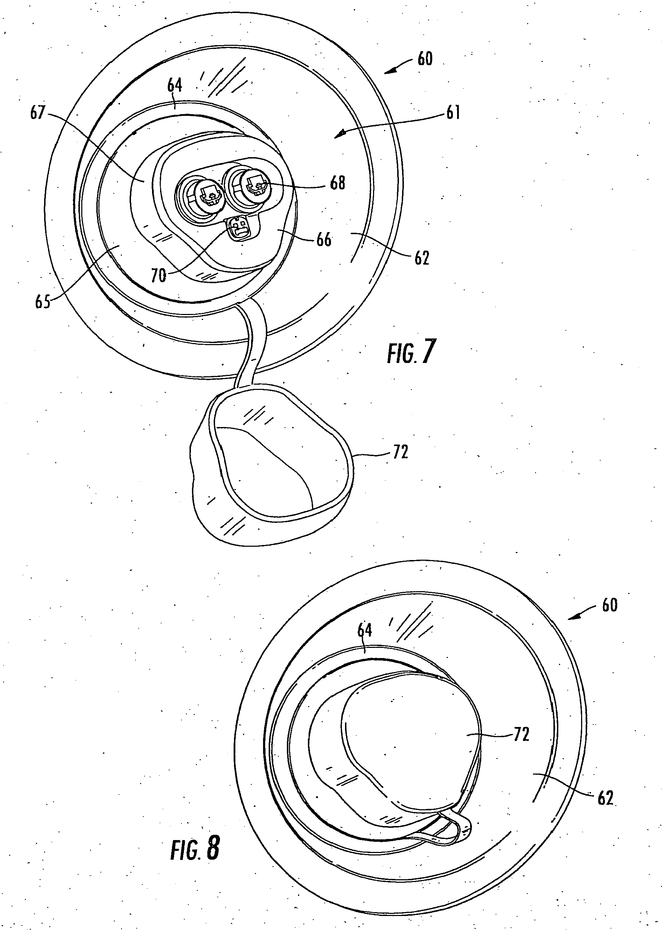

Turning now to FIGS. 7-13, according to an exemplary embodiment, a plug-in electric or gas-electric hybrid vehicle 10 is provided that includes a battery module and/or system such as that described above with respect to FIGS. 1-6. According to other exemplary embodiments, the plug-in vehicle may include other types of battery systems and/or modules.

According to an exemplary embodiment, the plug-in vehicle is configured to receive power from a source (e.g., from an external power source such as a wall socket, a battery charger, or the like). The plug-in vehicle includes a system that is configured to alert a user to a charging condition of the vehicle battery system, for example, to provide an indication when charging of the vehicle has reached a predetermined threshold.

Referring to FIGS. 7-8, a module or device 60 (e.g., a plug-in module) is provided to aid in charging (e.g., recharging) the battery system in the plug-in vehicle 10. The plug-in module is configured to couple to a source of power for charging the battery and to provide a visual or other indication of a battery system condition (e.g., full charge, low charge, etc.). The visual indication may be provided in the form of colored lights or other types of visual indications according to various exemplary embodiments.

According to an exemplary embodiment, the plug-in module 60 is provided toward a rear of the vehicle 10 and is accessible from the outside of the vehicle 10. For example, according to an exemplary embodiment, the plug-in module 60 is provided at a location toward the rear of the vehicle in a manner that is similar to the location where gas/fuel caps are provided on traditional gas-powered vehicles (e.g., at or proximate a rear quarter panel of the vehicle, etc.). According to other exemplary embodiments, the plug-in module may be provided at any suitable location on the vehicle (e.g., at the front of the vehicle, on a rear of the vehicle, under the hood of the vehicle, in the trunk of the vehicle, or at any other suitable location). The particular location of the plug-in module may be selected based on any number of factors, including convenience of access, location of the battery system within the vehicle, and the like).

According to an exemplary embodiment, the plug-in module is positioned such that elements of the plug-in module are provided within a recess provided in a vehicle panel. According to other exemplary embodiments, the plug-in module may be provided at other suitable locations and with other suitable configurations.

The plug-in module 60 includes a plurality of contacts or connectors (shown in FIG. 7, for example, as power contacts or connectors 68 and sense contacts or connectors 70). The contacts extend outward and away from a member or element 66 that is provided as part of the plug-in module 60. According to an exemplary embodiment, the member 66 is provided as a protruding member that extends away from a surface 65 contained within a recess or cutout 61. The member 66 has a size, shape, and configuration that is configured to be matingly received by another component that is coupled to a source of electrical power. According to an exemplary embodiment, the member 66 is a male member that is configured to be received by a female member (e.g., the member 66 is configured to be received in and engaged by an opening or cutout provided in a component that is connected to a source of electrical power). Although FIG. 7 illustrates one possible configuration for the member 66, it should be understood that according to other exemplary embodiments, the member may have other configurations (e.g., it may be provided as having a generally cylindrical shape, a rectangular shape, or any other suitable shape or configurations). According to other exemplary embodiments, the plug-in module may include a female member that is configured to receive a male member of a component that is connected to a source of electrical power (e.g., the member 66 may instead be provided as a recess or cutout that is configured to receive a male member of a battery connector).

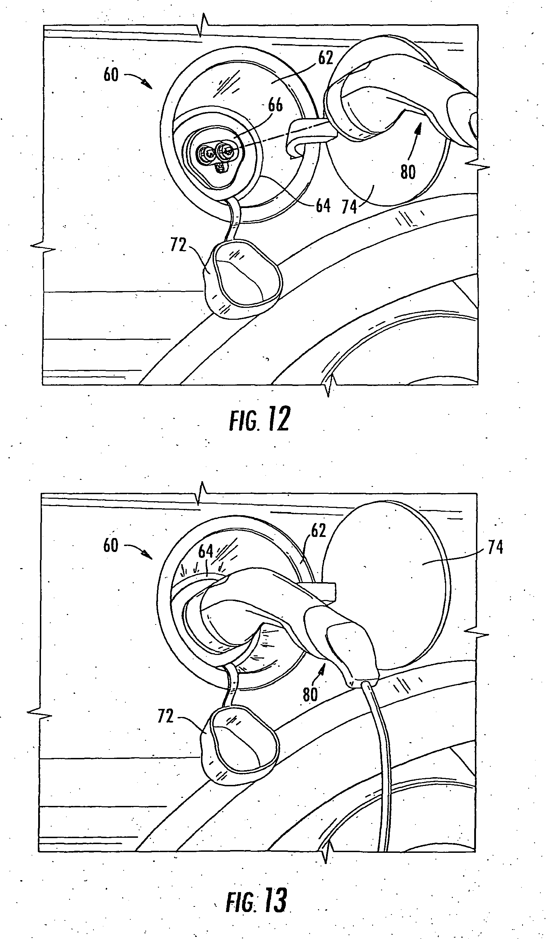

Power contacts 68 are configured to engage (e.g., contact, mate with, etc.) corresponding contacts 88 on a connector 80 (as shown, e.g., as a plug-in connector 80 in FIGS. 12-13) to provide a conductive path for electrical power from a power source 12 to the battery system 20. Sense contacts 70 are configured to engage (e.g., contact, mate with, etc.) corresponding sense contacts 90 on the plug-in connector 80 to sense when the plug-in module 60 and the plug-in connector 80 are coupled together such that a good electrical coupling is made.

According to an exemplary embodiment, the plug-in module 60 includes two power contacts 68 arranged generally horizontally and a single two-pin sense contact 70 provided below the power contacts 68. According to other embodiments, the plug-in module 60 may include any number of power contacts 68 and sense contacts 70. According to other exemplary embodiments, the power contacts 68 and the sense contacts 70 may be arranged differently. According to an exemplary embodiment, the power contacts 68 and 88 are shown as blade connectors and the sense contacts 70 and 90 are shown as pin connectors. According to other exemplary embodiments, any of the contacts may be configured as any suitable contacts such as blade connectors, pin connectors, bayonet connectors, standard household electrical contacts (e.g., a 115 volt 3-prong connector), or any other suitable type of connectors.

As described previously, power contacts 68 and sense contacts 70 extend from member 66, which extends outward and away from a surface 65. According to an exemplary embodiment, a removable cap or cover 72 is provided that is configured to receive the member 66 with an interference fit (e.g., such that the side walls 67 of the member 66 are engaged by the cap with a relatively tight or snug fit to secure the cap in place) and is configured to protect power contacts 68 and sense contacts 70 from moisture and other contaminants. Removable cap 72 may be coupled to the plug-in module 60 with an elongated member such as a cable or strip of material to prevent the cap 72 from being lost while still allowing the cap 72 to be moved clear of the member 66. Although according to an exemplary embodiment an interference fit is used to secure the cap to the member, according to other exemplary embodiments, other methods may be used (the cap may include threads that may be screwed onto the member where the member is provided as having a generally cylindrical shape, for example).

Plug-in module 60 further includes a member or element 62 that is configured to provide a visual indication that is indicative of a condition (e.g., a charging condition) of the vehicle battery system. According to an exemplary embodiment, the member 62 is provided in the form of a trim member that has a generally bowl shaped configuration that at least partially surrounds the member 66. For ease of reference, the member 62 will be referred to herein as the trim member 62. According to an exemplary embodiment, the trim member 62 has a mirrored or reflective surface.

According to an exemplary embodiment, the trim member 62 includes a visual indicator, shown as an illuminated member or element provided in the form of a light ring 64 or other illuminated structure. As shown in FIG. 13, the light ring 64 illuminates in different colors to provide a user with information about the operational status of the battery system 20. For example, according to one exemplary embodiment, the light ring 64 illuminates as a first color (e.g., orange) to indicate that the battery module 30 is charging and illuminates as a second color (e.g., green) to indicate that the battery module 30 is fully charged. According to other exemplary embodiments, the light ring 64 may provide a user with status information in other ways such as with different colors, a blinking light, a dim or a bright light, etc. Other colors may also be used according to other exemplary embodiments. Although illustrated as having a ring-type configuration that surrounds the member 66, according to other exemplary embodiments, the visual indicator may be provided as having any of a variety of forms (e.g., it may be provided as a single light bulb such as an LED or other type of light, etc.).

According to an exemplary embodiment, the light ring 64 is illuminated by one or more LEDs. According to another exemplary embodiment, the light ring may be illuminated with another light source such as incandescent bulbs, organic light emitting diodes (OLEDs), electroluminescent materials, or any other suitable light source. The illuminated portion of the trim member 62 may be a discrete portion such as the light ring 64 or may be a diffuse portion (e.g., all of the trim member 62 may be configured to be illuminated). An illuminated portion such as the light ring 64 may receive power from the battery module 30, from the outside power source 12, or from another power source such as a 12V battery provided in the vehicle 10.

According to other exemplary embodiments, vehicle may include visual indicators in other locations to convey information to a user such as the charge state of the vehicle, the connection status of plug-in connector, etc. For example, an indicator such as an icon or a gauge may be provided as part of the dashboard of the vehicle 10 or on the plug-in connector 80.

According to an exemplary embodiment, a member or element 74 such as a door, panel, or other structure is provided to conceal the plug-in module 60 (see, e.g., FIG. 13).
According to an exemplary embodiment, the member 74 is provided as having a similar configuration to that of a fuel cap door. According to other exemplary embodiments, other configurations for the member may be used.

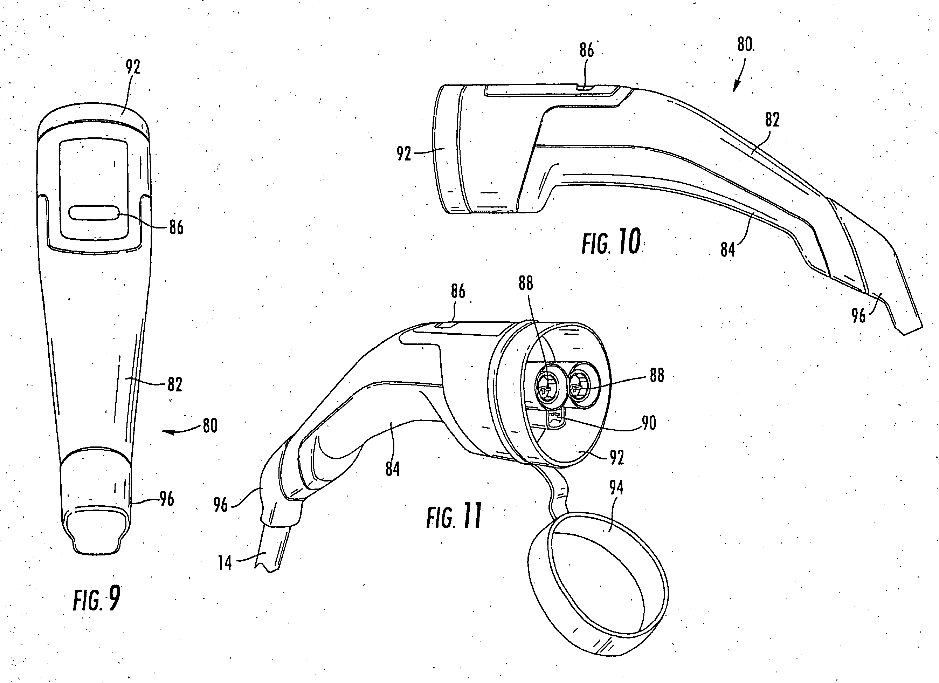

Referring now to FIGS. 9-11, a plug-in connector 80 (e.g., device, member) is provided to couple the vehicle 10 to an exterior power source 12 by engaging the plug-in module 60. The plug-in connector 80 is coupled to the exterior power source 12 with a cord or cable 14. The plug-in connector 80 may be stored in a housing or other enclosure to protect or conceal it when not in use. The plug-in connector 80 includes an elongated body 82, a grip portion 84, an indicator light 86, and a wall 92 surrounding power contacts 88 and sense contacts 90.

According to an exemplary embodiment, the body 82 of the plug-in connector 80 may be molded.from a polymer, formed from a sheet metal such as aluminum (or another alloy), or from another suitable material. A grip portion 84 is provided on the body 82 to facilitate the grasping of the plug-in connector 80. According to an exemplary embodiment, the grip portion 84 is formed from a resilient material such as a silicone that is overmolded to the body 82. According to other exemplary embodiments, the grip portion 84 may comprise a molded texture. According to an exemplary embodiment, the grip portion 84 is provided generally on the underside of the body 82, but in other exemplary embodiments, the grip portion 84 may be provided elsewhere such as on the top of the body 82 or may encircle the body 82. The plug-in connector 80 may further include a resilient portion 96 proximate to the power cord 14. The resilient portion 96 allows a user to more easily reorient the plug-in connector 80 without resisting a force caused by the cord 14.

The plug-in connector 80 includes one or more power circuit contacts 88 and one or more sense contacts 90. As discussed above, power contacts 88 engage corresponding contacts 68 on the plug-in module 60 to provide a conductive path for electrical power from the outside power source 12 to the battery system 20. Sense contacts 90 engage corresponding sense contacts 70 on the plug-in module 60 to sense when the plug-in module 60 and the plug-in connector 80 are coupled together.

According to an exemplary embodiment, the plug-in connector 80 includes two power contacts 88 arranged generally horizontally and a single two-pin sense contact 90 provided below the power contacts 68 to engage the contacts 68 and 70 on the plug-in module 60. According to various exemplary embodiments, the number and arrangement of power contacts 88 and sense contacts 90 may be varied to correspond to contacts 68 and 70.

Power contacts 88 and sense contacts 90 are surrounded by a raised skirt or wall 92. Wall 92 protects contacts 88 and 90 from damage caused by accidental impact and reduces the chance of shock and/or injury to a user caused by accidental contact with contacts 88 and 90. Wall 92 is configured to receive the raised member 66 when the contacts 88 and 90 engage the contacts 68 and 70 to further couple the plug-in connector 80 to the plug-in module 60.

According to an exemplary embodiment, a cap 94 is provided to fit over the end of the plug-in connector 80 when the plug-in connector 80 is disengaged from the plug-in module 60. The cap 94 is fitted to the wall 92 with an interference fit and is configured to protect the power contacts 88 and sense contacts 90 from moisture and other contaminants. The cap 94 may be coupled to the plug-in connector 80 with an elongated member such as a cable or strip of material to prevent the cap 94 from being lost while still allowing the cap 94 to be moved clear of the end of the plug-in connector 80.

The plug-in connector 80 further includes a visual indicator, such as an illuminated portion shown as an indicator light 86. Indicator light 86 illuminates in different colors to provide a user with information about the operational status of the connection between the plug-in connector 80 and the plug-in module 60. For example, according to one exemplary embodiment, the indicator light 86 illuminates as a first color (e.g., orange or red) to indicate an insufficient connection between the plug-in connector 80 and the plug-in module 60 (e.g., between the contacts 68 and 70 and the contacts 88 and 90) and illuminates as a second color (e.g., green) to indicate a proper connection between the plug-in connector 80 and the plug-in module 60. According to other exemplary embodiments, the indicator light 86 may provide a user with status information in other ways such as with different colors, a blinking light, a dim or bright light, etc. According to other exemplary embodiments, the indicator light 86 may provide a user with status information other than the connection status (e.g., charging status).

The plug-in module 60 and the plug-in connector 80 are provided to allow the battery system 20 to receive power from an outside power source 12. According to an exemplary embodiment, the power source 12 is a standard electrical wall outlet that is connected to the electrical grid and provides electrical energy in the form of an alternating current (e.g., 110 VAC, 220 VAC, etc.).

As shown in FIG. 14, according to an exemplary embodiment, the plug-in connector 80 is coupled to the power source 12 (e.g., with a cord 14) and is configured to engage the plug-in receptacle provided on the vehicle 10. The plug-in module 60 is coupled to a battery charger 58. The battery charger 58 provides power to the battery module 30.
The battery charger 58 may provide feedback 59 to the plug-in module 60 regarding the state of the battery module 30. For example, the battery charger 58 may indicate whether the battery module 30 is fully charged or charging to determine the color displayed by the light ring 64.

As utilized herein, the terms "approximately," "about," "substantially", and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the invention as recited in the appended claims.

It should be noted that the term "exemplary" as used herein to describe various embodiments is intended to indicate that such embodiments are possible examples, representations, and/or illustrations of possible embodiments (and such term is not intended to connote that such embodiments are necessarily extraordinary or superlative examples).

The terms "coupled," "connected," and the like as used herein mean the joining of two members directly or indirectly to one another. Such joining may be stationary (e.g., permanent) or moveable (e.g., removable or releasable). Such joining may be achieved with the two members or the two members and any additional intermediate members being integrally formed as a single unitary body with one another or with the two members or the two members and any additional intermediate members being attached to one another.

References herein to the positions of elements (e.g., "top," "bottom," "above," "below," etc.) are merely used to describe the orientation of various elements in the FIGURES. It should be noted that the orientation of various elements may differ according to other exemplary embodiments, and that such variations are intended to be encompassed by the present disclosure.

It is important to note that the construction and arrangement of the battery system as shown in the various exemplary embodiments is illustrative only. Although only a few embodiments have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials; colors, orientations, etc.) without materially departing from the novel teachings and advantages of the subject matter described herein. For example, elements shown as integrally formed may be constructed of multiple parts or elements, the position of elements may be reversed or otherwise varied, and the nature or number of discrete elements or positions may be altered or varied. The order or sequence of any process or method steps may be varied or re-sequenced according to alternative embodiments. Other substitutions, modifications, changes and omissions may also be made in the design, operating conditions and arrangement of the various exemplary embodiments without departing from the scope of the present invention.

## Claims

1. A battery module (30) for use in an electric vehicle comprising:
a housing (41); and
a member (32) provided within the housing (41) that contains a plurality of electrochemical cells (40) and comprises a plurality of apertures (36) in an outer surface of the member (32) to allow a thermal management fluid to exit the member (32) after passing adjacent outer surfaces of the plurality of electrochemical cells (40) within the member (32);
wherein the plurality of apertures (36) include apertures of a first size (36c) near a first end of the member (32) and apertures of a second size (36a) larger than the first size near a second opposite end of the member (32) to provide relatively even thermal regulation among the plurality of electrochemical cells (40).

2. The battery module (30) of Claim 1, wherein the housing (41) comprises an outlet (130) in a cover (42) of the housing that is configured to allow the thermal management fluid to exit the housing (41), and wherein the member (32) is positioned within the housing (41) such that first end of the member (32) is closer to the outlet (130) than the second end of the member (32).

3. The battery module (30) of Claim 1, wherein plurality of apertures (36) include apertures of a third size (36b) intermediate the apertures of the first size (36c) and the apertures of the second size (36a), the third size being larger than the first size and smaller than the second size.

4. The battery module (30) of Claim 1, wherein the plurality of apertures (36) are each provided as elongated slots extending along at least a portion of the length of an adjacent one of the plurality of electrochemical cells (40).

5. The battery module (30) of Claim 1, wherein the plurality of electrochemical cells (40) includes a first layer of electrochemical cells (40) and a second layer of electrochemical cells (40) above the first layer of electrochemical cells (40), and wherein the plurality of apertures (36) are provided only adjacent the second layer of electrochemical cells (40).

6. The battery module (30) of Claim 5, wherein at least one of the plurality of apertures (36) is provided adjacent each of the plurality of electrochemical cells (40) in the second layer.

7. The battery module (30) of Claim 5, wherein the electrochemical cells (40) in the first layer are offset from the electrochemical cells (40) in the second layer.

8. The battery module (30) of Claim 1, wherein the outer surface of the member (32) includes a plurality of curved surfaces that are configured to nest with cylindrical electrochemical cells (40), and wherein each of the plurality of apertures (36) is provided in one of the curved surfaces.

9. The battery module (30) of Claim 8, wherein at least one of the plurality of curved surfaces includes more than one aperture of the first size.

10. The battery module (30) of Claim 1, further comprising a fan (124) to direct the thermal management fluid into the housing (41) and through the member (32).

11. The battery module (30) of Claim 1, further comprising a plurality of sensors (56) configured to sense the temperature of the battery cells (40).

12. The battery module (30) of Claim 1, wherein the housing (41) includes an opening (122) to allow air from outside the housing (41) to enter the housing (41) to act as the thermal management fluid.

13. The battery module (30) of Claim 1, further comprising a disconnect feature (46) configured to disconnect a high voltage connection of the battery module (30).

14. The battery module (30) of Claim 1, wherein the plurality of electrochemical cells (40) are lithium-ion cells.

15. A battery module (30) comprising a plurality of members (32) as recited in any of the preceding claims provided within a housing.
